Europäisches Patentamt

European Patent Office

Office européen des brevets

(11) Veröffentlichungsnummer: **0 176 724 B1**

# EUROPÄISCHE PATENTSCHRIFT

(45) Veröffentlichungstag der Patentschrift: **17.07.91**

(51) Int. Cl.⁵: **F16K 11/07**, F15B 13/04

(21) Anmeldenummer: **85110308.5**

(22) Anmeldetag: **17.08.85**

(54) **Hydraulisches Wegeventil.**

(30) Priorität: **01.10.84 DE 3435985**

(43) Veröffentlichungstag der Anmeldung:
**09.04.86 Patentblatt 86/15**

(45) Bekanntmachung des Hinweises auf die
Patenterteilung:
**17.07.91 Patentblatt 91/29**

(84) Benannte Vertragsstaaten:
**DE FR GB IT**

(56) Entgegenhaltungen:
EP-A- 0 092 074
DE-A- 3 304 583
FR-A- 2 137 456
GB-A- 656 622

(73) Patentinhaber: **ROBERT BOSCH GMBH**
**Postfach 50**
**W-7000 Stuttgart 1(DE)**

(72) Erfinder: **Olbrich, Gottfried, Dipl.-Ing.**
**Bleiche 46**
**W-7123 Sachsenheim 2(DE)**

## Beschreibung

Stand der Technik

Die Erfindung geht aus von einem hydraulischen Wegeventil nach der Gattung des Hauptanspruchs. Ein derartiges bekanntes Wegeventil (Siehe DE-A-3304583) weist am Steurschieber eine Meßdrosselstele auf, die mit Mitteln zur lastdruckunabhängigen Steuerung des Druckmittels in Wirkverbindung steht. Dieses Wegeventil hat aber den Nachteil, daß bei voller Schieberauslenkung die Meßdrosselstelle die Verbindung vom Zulaufanschluß zur Zulaufkammer vollständig öffnet. Dadurch fließt das gesamte von der Pumpe geförderte Druckmittel zum Verbraucher und kann nicht, falls mehrere Verbraucher an die Pumpe angeschlossen sind, individuell angepaßt werden.

Vorteile der Erfindung

Das erfindungsgemäße Wegeventil mit den kennzeichnenden Merkmalen des Hauptanspruchs hat demgegenüber den Vorteil, daß der maximale Druckmittelstrom zum Verbraucher auf eine geringere Druckmittelmenge begrenzt werden kann. Abhängig von der Betätigungsrichtung des angeschlossenen Verorauchers sind Druckmittelströme mit verschiedenen Größen möglich. Dadurch ist das Wegeventil auch für andere Anvendungsfälle geeignet. In den Arbeitsstellungen Heben und Senken kann der Verbraucher mit unterschiedlichen Betätigungsgeschwindigkeiten gesteuert werden. Die den maximalen Druckmittelstrom bestimmenden Steuerkanten sind im Bereich der Meßdrosselstelle für die Feinsteuerung angeordnet und können in einem Arbeitsgang zusammen mit der Meßdrosselstelle hergestellt werden. Bei maximaler Auslenkung des Steuerschiebers ist in dessen jeweiligen Arbeitsstellungen der von der Druckmittelquelle geförderte Druckmittelstrom begrenzbar.

Durch die in den Unteransprüchen aufgeführten Maßnahmen sind vorteilhafte Weiterbildungen und Verbesserungen des im Hauptanspruch angegebenen Wegeventils möglich.

Zeichnung

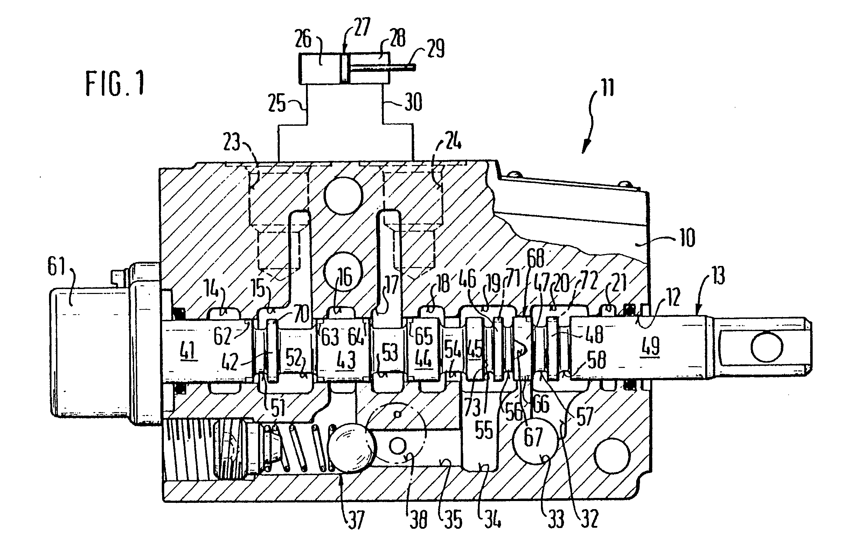

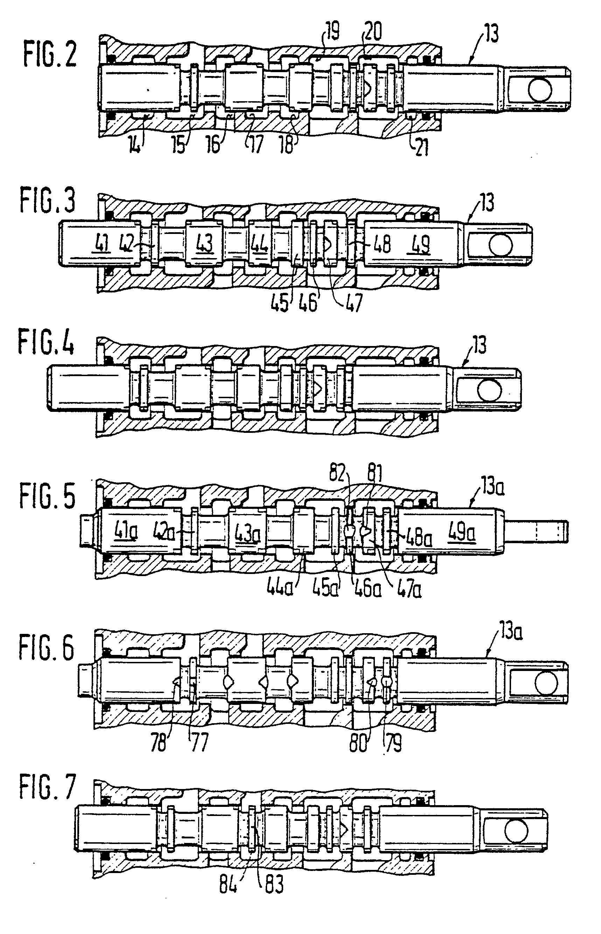

Ein Ausführungsbeispiel der Erfindung ist in der Zeichnung dargestellt und in der nachfolgenden Beschreibung näher erläutert. Es zeigen Figur 1 einen Längsschnitt durch ein hydraulisches Wegeventil mit einem sich in Neutralstellung befindlichen Steuerschieber, die Figuren 2, 3 und 4 jeweils im vergrößerten Maßstab den Steuerschieber nach Figur 1 in den beiden Arbeitsstellungen bzw. in der Freigangstellung, die Figuren 5 und 6 eine Abwandlung des Steuerschiebers nach Figur 1 in Vorder- und Seitenansicht und die Figur 7 eine zweite Abwandlung des Steuerschiebers nach Figur 1.

Beschreibung des Ausführungsbeispiels

In einem Gehäuse 10 eines Wegeventils 11 ist eine etwa mittige, durchgehende Schieberbohrung 12 ausgebildet, in der ein Steuerschieber 13 gleitend geführt ist. In der Schieberbohrung 12 sind acht Kammern 14 bis 21 ausgebildet, wobei die Kammern 14, 18 als erste bzw. zweite Rücklaufkammer, die Kammern 15, 17 als erste bzw. zweite Verbraucherkammer, die Kammer 16 als Zulaufkammer und die Kammern 19, 20 als erste bzw. zweite Drosselkammer dienen. Die erste und zweite Verbraucherkammer 15, 17 stehen mit Verbraucheranschlüssen 23,24 in Verbindung. Am Verbraucheranschluß 23 ist eine Leitung 25 angeschlossen, die zu einem Druckraum 26 eines Arbeitszylinders 27 führt. Von dessen anderem Druckraum 28, in dem sich die Kolbenstange 29 befindet, führt eine zweite Leitung 30 zum Verbraucheranschluß 2-.

Die zweite Drosselkammer 20 steht über einen Kanal 32 mit einem Querkanal 33 und mit einer nicht dargestellten Pumpe in Verbindung. Von der ersten Drosselkammer 19 führt ein Kanal 34 zu einem parallel zur Schieberbohrung 12 angeordneten Kanal 35. Dieser ist mit der Zulaufkammer 16 verbunden und durch ein zur Zulaufkammer 16 hin öffnendes Rückschlagventil 37 abgesichert. Zwischen dem Rückschlagventil 37 und dem Kanal 34 mündet in den Kanal 35 ein senkrecht zur Zeichenebene ausgebildeter Steuerkanal 38. Dieser dient zur Ableitung eines Steuerdrucks aus der ersten Drosselkammer 19 zu einem nicht dargestellten Regler einer Verstellpumpe bzw. zu einem Stromregelventil, um derart eine lastdruckunabhängige Steuerung zu erreichen. Bei Parallelbetätigung mehrerer Wegeventile kann dieser Steuerdruck aus der ersten Drosselkammer 19 auch über ein nicht dargestelltes logisches System zur Auswahl des maximalen Steuerdrucks geleitet werden.

Der Steuerschieber 13 hat neun Kolbenabschnitte 41 bis 49, die durch acht Fingnuten 51 bis 58 voneinander getrennt sind. Der erste äußere Kolbenabschnitt 41 - bezogen auf die Figur von links nach rechts gesehen - ragt in ein becherförmiges Gehäuseteil 61, in dem ihm eine nicht dargestellte doppeltwirkende Rückholeinrichtung zugeordnet ist. Der andere äußere Kolbenabschnitt 49 ragt über die Schieberbohrung 12 hinaus, so daß der Steuerschieber 13 an diesem Kolbenabschnitt 49 von außen bedienbar ist. An den Kolbenabschnitten 41, 43, 44 sind den Ringnuten 51, 52, 53 des Steuerschiebers 13 zugewandte Steuerkerben 62, 63, 64, 65 ausgebildet, die zur Richtungssteuerung des Druckmittels und damit des Arbeitszylinders 27 dienen. Am siebten Kolbenabschnitt 47 befinden sich der Ringnut 57 und der Ringnut 56 zugeordnete Steuerkerben 66, 67, die zusammen als Meßdrosselstelle 68 zwischen den beiden Drosselkammern 19, 20 wirken. Die Meßdrosselstelle 68 dient für das nicht dargestellte lastunabhängige Steuersystem. Ferner weisen der zweite, der sechste und der achte Kolbenabschnitt 42, 46, 48, die alle schmal ausgebildet sind, Steuernuten 70, 71, 72 auf. Sie können auch als die Kolbenabschnitte 42, 46, 48 durchdringende Querbohrungen ausgebildet sein. Am fünften Kolbenabschnitt 45 ist eine Abgriffsstelle 73 vorgesehen, die zur Ableitung des Steuerdrucks für die lastdruckunabhängige Steuerung in den Arbeitsstellungen des zugeordneten Steuerschiebers 13 dient.

Die Wirkungsweise des Wegeventils 11 wird anhand der Figuren 1 bis b erläutert. Befindet sich der Steuerschieber 13 des Wegeventils 11 in der in Figur 1 gezeichneten Neutralstellung, so blockieren die Steuerkerben 66, 67 des siebten Kolbenabschnitts 47 die Verbindung zwischen der zweiten Drosselkammer 20 und der ersten Drosselkammer 19. Damit ist auch der Querkanal 33 zur Pumpe abgesperrt. Zudem sind in an sich bekannter Weise die Verbraucheranschlüsse 23, 24 hydraulisch blockiert. Dazu versperrt der dritte Kolbenabschnitt 43 die Verbindung von der Zulaufkammer 16 zur ersten Verbraucherkammer 15 bzw. zur zweiten Verbraucherkammer 17. Ferner blockiert der vierte Kolbenabschnitt 44 die Verbindung von der zweiten Verbraucherkammer 17 zur Rücklaufkammer 18 und der erste Kolbenabschnitt 41 die Verbindung von der ersten Verbraucherkammer 15 zur ersten Rücklaufkammer 14. Der fünfte und der sechste Kolbenabschnitt 45, 46 des Steuerschiebers 13 befinden sich im Bereich der ersten Drosselkammer 19, so daß die erste Drosselkammer 19 über die Ringnut 54 mit der zweiten Rücklaufkammer 18 verbunden ist. Dadurch ist die erste Drosselkammer 19 zur zweiten Rücklaufkammer 18 entlastet. Ferner steht über diese Verbindung auch die Abgriffsstelle 73 mit der zweiten Rücklaufkammer 18 in Verbindung, so daß sich der Steuerdruck aus dem angeschlossenen logischen System bzw. aus dem Druckraum des Stromregelventils hierüber abbauen kann und die das Druckmittel fördernde Pumpe nur gegen einen relativ niedrigen Neutralumlaufdruck arbeiten muß.

Wird der Steuerschieber 13 in seine erste Arbeitsstellung Heben - wie in Figur 2 näher gezeigt - verschoben, indem er aus dem Gehäuse 10 herausgezogen wird, so öffnet die Steuerkerbe 63 des dritten Kolbenabschnitts 43 die Verbindung von der Zulaufkammer 16 zur ersten Verbraucherkammer 15. Zugleich gibt die Steuerkerbe 65 des vierten Kolbenabschnitts 44 die Verbindung von der zweiten Verbraucherkammer 17 zur zweiten Rücklaufkammer 18 frei. Während die Steuerkerben 63, 65 die Richtung des Druckmittelstroms bestimmen, wird dessen Größe gleichzeitig durch die Auslenkung der Steuerkerbe 67 am siebten Kolbenabschnitt 47 erreicht. Gleichzeitig blockiert der vierte Kolbenabschnitt 44 die Verbindung von der ersten Drosselkammer 19 zur zweiten Rücklaufkammer 18. Wird der Steuerschieber 13 in seine maximale Hebenstellung ausgelenkt - wie in Figur 2 dargestellt - so befindet sich der sechste Kolbenabschnitt 46 im Bereich zwischen der ersten und der zweiten Drosselkammer 19, 20 und steuert dadurch die maximale Größe des Druckmittelstroms zwischen den beiden Drosselkammern 19, 20 bzw. zum Verbraucner 27. Somit wird der maximale Druckmittelstrom durch die Größe der Steuernut 71 des sechsten Kolbenabschnitts 46 bestimmt. Der in der ersten Drosselkammer 19 herrschende Steuerdruck kann somit über die Abgriffsstelle 73 abgeleitet und dem nicht dargestellten Pumpenregler bzw. dem Stromregelventil zugeführt verden. Das Rückschlagventil 37 vermeidet dabei ein Absinken des Arbeitszylinders 27, insbesondere solange der herrschende Lastdruck höher ist als der sich aufbauende Pumpendruck.

Wird der Steuerschieber 13 in die in Figur 3 gezeigte zweite Arbeitsstellung Senken gebracht, so wird er aus der Keutralstellung heraus in das Gehäuse 10 hineingedrückt. Dabei öffnet die Steuerkerbe 64 des dritten Kolbenabschnitts 43 die Verbindung von der Zulaufkammer 16 zur zweiten Verbraucherkammer 17, während die Steuerkerbe 62 des ersten Kolbenabschnitts 41 die erste Verbraucherkammer 15 zur ersten Rücklaufkammer 14 hin entlastet. Die Größe des Druckmittelstroms wird von der Steuerkerbe 66 des siebten Kolbenabschnitts 47 bestimmt. Der fünfte Kolbenabschnitt 45 blockiert die Verbindung von der ersten Drosselkammer 19 zur zweiten Rücklaufkammer 18. Über die Abgriffsstelle 73 kann wieder aus der ersten Drosselkammer 19 der Steuerdruck abgegriffen werden.

In der in der Figur 3 gezeigten maximalen Auslenkung des Steuerschiebers 13 in der zweiten Arbeitsstellung Senken befindet sich der achte Kolbenabschnitt 48 zwischen den beiden Drosselkammern 19, 20, so daß die Steuernut 72 die maximale Größe des Druckmittelstroms begrenzt. Das von der Pumpe geförderte Druckmittel strömt nun über den Querkanal 33, den Kanal 32, die zweite Drosselkammer 20, die Steuernut 72, die erste Drosselkammer 19 und über die Kanäle 34, 35, in die Zulaufkammer 16. Von dort fließt es über die zweite Verbraucherkammer 17, über den Verbraucheranschluß 24 und die Leitung 30 in den Druckraum 28 des Arbeitszylinders 27. Das aus dem Druckraum 26 des Arbeitszylinders 27 abströmende Druckmittel fließt über die Leitung 25, den Verbraucheranschluß 23, die erste Verbraucherkammer 15 und über die Steuernut 70 in die erste Rücklaufkammer 14. Der an der Abgriffsstelle 73 in der ersten Drosselkammer 19 abgegriffene Steuerdruck wird über den Steuerkanal 38 wiederum zur lastdruckunabhängigen Steuerung dem Stromregelventil zugeleitet. Der maximale Druckmittelstrom zum Arbeitszylinder 27 wird vorteilhafterweise durch die Steuernut 70 des zweiten Kolbenabschnitts 42 bzw. der Steuernut 72 des achten Kolbenabschnitts 48 begrenzt. Die Steuernuten 70 bis 72 sind zweckmäßigierweise gleich groß, so daß der maximale Druckmittelfluß in den Arbeitsstellungen Senken und Heben gleich groß ist. Insbesondere die Steuernut 70 ist in ihrer Größe vom am Verbraucher 27 wirkenden Lastdruck abhängig, so daß die Steuernut 70 auch kleiner als die Steuernuten 71, 72 sein kann.

Wird der Steuerschieber 13 über die zweite Arbeitsstellung Senken hinaus noch stärker in das Gehäuse 10 des Wegeventils 11 hineingedrückt, so nimmt der Steuerschieber 13 die in der Figur 4 gezeichnete sogenannte Freigangstellung ein. Dabei ist die Zulaufkammer 16 durch die Steuerkerbe 64 des dritten Kolbenabschnitts 43 und durch die Steuerkerbe 65 des vierten Kolbenabschnitts 44 zu den jeweiligen Verbraucherkammern 15, 17 hin blockiert. Die erste Verbraucherkammer 15 ist über die Steuerkerbe 63 des dritten Kolbenabschnitts 43 und die Ringnut 52 zur ersten Rücklaufkammer 14 hin entlastet. Die zweite Verbraucherkammer 17 ist über die Ringnut 54, die sich zwischen dem vierten und dem fünften Kolbenabschnitt 44, 45 befindet, mit der zweiten Rücklaufkammer 18 verbunden. Dadurch sind beide Verbraucherkammern 15, 17 jeweils mit ihren Rücklaufkammern 14, 18 verbunden, so daß sich im angeschlossenen Arbeitszylinder 27 die Kolbenstange 29 frei bewegen läßt. Zugleich ist die erste Drosselkammer 19 über die Steuernut 71 des sechsten Kolbenabschnitts 46 mit der zweiten Rücklaufkammer 18 verbunden. Der neunte Kolbenabschnitt 49 blockiert die Verbindung von der zweiten Drosselkammer 20 zur ersten Drosselkammer 19. Die Abgriffsstelle 73 des Steuerdrucks ist zur zweiten Rücklaufkammer 18 hin entlastet, so daß die Pumpe gegen einen relativ niedrigen Bereitschaftsdruck fördern kann.

In Figur 5 ist die Vorderansicht eines Steuerschiebers 13a dargestellt, seine Seitenansicht in Figur 6. Gleiche Teile sind wieder wie zuvor mit denselben Ziffern unter Hinzufügung eines Buchstabens bezeichnet. Am Außenumfang des Kolbenabschnitts 42a ist auf einer Seite eine Steuernut 77 ausgebildet, deren Querschnitt etwa dem Öffnungswinkel einer am Kolbenabschnitt 41a ebenfalls auf dieser Seite ausgebildeten Steuerkerbe 78 entspricht. Ferner befindet sich am achten Kolbenabschnitt 48a auf dieser Seite eine Steuernut 79, deren Querschnitt die Größe des Öffnungswinkels der sich am Kolbenabschnitt 47a befindenden Steuerkerbe 80 hat. Auf der Vorderseite dieses siebten Kolbenabschnitts 47a ist eine zweite Steuerkerbe 81 ausgebildet, die in Größe und Form der Steuerkerbe 80 auf der Gegenseite entspricht. Ebenfalls auf der Vorderseite ist am sechsten Kolbenabschnitt 46a eine Steuernut 82 angeordnet, deren Querschnitt gleich dem Öffnungswinkel der Steuerkerbe 81 ist. Die Steuernut 79 des achten Kolbenabschnitts 48a und die Steuernut 82 des sechsten Kolbenabschnitts 46a sind gleich ausgebildet, während die Steuernut 77 auf der Gegenseite des zweiten Kolbenabschnitts 42a einen kleineren Querschnitt als diese hat. Dadurch ist es möglich, in den Arbeitsstellungen Heben und Senken den Druckmittelfluß zum Arbeitszylinder 27 bei maximaler Auslenkung des Steuerschiebers 13a auf unterschiedliche Werte zu begrenzen. In der Arbeitsstellung Heben ist die Größe des Druckmittelstroms durch die Steuernut 82 am Kolbenabschnitt 46a bestimmt. In der Arbeitsstellung Senken hingegen begrenzt die Steuernut 79 am Kolbenabschnitt 48a die Größe des Druckmittelstroms. Ein angeschlossener Arbeitszylinder ist somit mit einer größeren Druckmittelmenge anhebbar, und zwar schnell anhebbar, und mit einer kleineren Druckmittelmenge absenkbar, und zwar langsam absenkbar. Der Druckmittelstrom ist somit abhängig von der Bewegungsrichtung des angeschlossenen Arbeitszylinders.

Ferner ist es auch - wie in Figur 7 dargestellt - möglich, zwischen dem dritten und dem vierten Kolbenabschnitt 43 bzw. 44 einen zusätzlichen Kolbenabschnitt 83 mit einer Steuernut 84 anzuordnen. Dieser Kolbenabschnitt 83 mit seiner Steuernut 84 begrenzt in Stellung Heben des Steuerschiebers 13 den über den Verbraucheranschluß 24 abfließenden Druckmittelstrom Die Größe dieser Steuernut 84 kann dabei wieder den Steuernuten 70, 71, 72 entsprechen, oder - entsprechend der Steuernut 70 - in ihrer Größe vom am Verbraucher 27 wirkenden Lastdruck abhängig sein. Es ist möglich, den Kolbenabschnitt 83 zusätzlich zu den drei anderen Kolbenabschnitten 42, 46, 48 oder ohne den zweiten Kolbenabschnitt 42 anzuordnen.

Selbstverständlich sind am Wegeventil 11 doppelt- oder einfachwirkende Arbeitszylinder anschließbar. Ferner wäre es auch möglich, ohne vom Gedanken der Erfindung abzuweichen, den Steuerschieber nur für drei Stellungen, d.h. ohne Freigangstellung, auszubilden.

Selbstverständlich sind als Steuernuten auch andere Formen von Steuerausnehmungen, wie z.B. Bohrungen, denkbar.

### Patentansprüche

1. Hydraulisches Wegeventil (11) mit einem in einer Schieberbohrung (12) eines Gehäuses (10) angeordneten Steuerschieber (13), an dem zur Richtungssteuerung eines angeschlossenen Verbrauchers (27) Steuerkerben (62, 63, 64, 65) ausgebildet sind, mit denen zwei Verbraucheranschlüsse (23, 24) in Arbeitsstellungen abwechselnd mit einer Zulaufkammer (16) oder mit einer ersten (14) oder zweiten (18) Rücklaufkammer verbindbar und in einer Neutralstellung absperrbar sind und an dem eine Meßdrosselstelle (68) bildende Steuerkerben (66, 67) angeordnet sind, die in dem vom mit einer Druckmittelquelle verbundenen Zulauf (33) zu den Verbraucheranschlüssen (23, 24) fließenden Druckmittelstrom den Steuerkerben (62, 63, 64, 65) für die Richtungssteuerung vorgeschaltet sind, und mit einer Abgriffsstelle (73) stromabwärts von der Meßdrosselstelle (68) zur Ableitung eines Steuerdruckes zu Mitteln für eine lastdruckunabhängige Steuerung in den Arbeitsstellungen des Steuerschiebers (13) und mit einem stromabwärts der Meßdrosselstelle (68) geschalteten, beide Verbraucheranschlüsse (23, 24) absichernden Rückschlagventil (37), dadurch gekennzeichnet, daß am Steuerschieber (13) zusätzliche Kolbenabschnitte (42, 46, 48, 83) mit Steuerausnehmungen (70, 71, 72, 84) ausgebildet sind, welche den maximalen Druckmittelstrom bei maximaler Auslenkung des Steuerschiebers (13) in seiner jeweiligen Stellung begrenzen.

2. Wegeventil nach Anspruch 1, dadurch gekennzeichnet, daß am Steuerschieber (13) vor und hinter der Meßdrosselstelle (68) jeweils ein zusätzlicher Kolbenabschnitt (46, 48) ausgebildet ist und daß diese beiden Kolbenabschnitte (46, 48) Steuerausnehmungen (71, 72) aufweisen, die den maximalen Druckmittelstrom bei maximaler Auslenkung des Steuerschiebers (13) in seiner jeweiligen Stellung begrenzen.

3. Wegeventil nach Anspruch 1 und/oder 2, dadurch gekennzeichnet, daß die Steuerausnehmung (70) eines dritten zusätzlichen Kolbenabschnitts (42) den Druckmittelfluß vom ersten Verbraucheranschluß (23) zur ersten Rücklaufkammer (14) begrenzt.

4. Wegeventil nach einem der Ansprüche 1 bis 3, dadurch gekennzeichnet, daß die Steuerausnehmung (84) eines vierten zusätzlichen Kolbenabschnitts (83) den Druckmittelfluß vom zweiten Verbraucheranschluß (24) zur zweiten Rücklaufkammer (18) begrenzt.

5. Wegeventil nach einem der Ansprüche 1 bis 4, dadurch gekennzeichnet, daß die Steuerausnehmungen (70, 71, 72, 84) der zusätzlichen Kolbenabschnitte (42, 46, 48, 83) gleich groß ausgebildet sind.

6. Wegeventil nach einem der Ansprüche 1 bis 4, dadurch gekennzeichnet, daß die Steuerausnehmung (70) des dritten zusätzlichen Kolbenabschnitts (42) kleiner als die Steuerausnehmung (72) des zweiten zusätzlichen Kolbenabschnitts (48) ausgebildet ist.

7. Wegeventil nach einem der Ansprüche 1 bis 4, dadurch gekennzeichnet, daß die Steuerausnehmung (84) des vierten zusätzlichen Kolbenabschnitts (83) kleiner als die Steuerausnehmung (71) des ersten zusätzlichen Kolbenabschnitts (46) ausgebildet ist.

8. Wegeventil nach einem der Ansprüche 1 bis 7, dadurch gekennzeichnet, daß die Steuerausnehmungen (77, 79) des zweiten und dritten zusätzlichen Kolbenabschnitts (42a, 48a) auf der einen Seite am Steuerschieber (13a) und die Steuerausnehmungen (72, 84) des ersten und vierten zusätzlichen Kolbenabschnitts (46a, 83) auf der anderen Seite des Steuerschiebers (13a) ausgebildet sind.

9. Wegeventil nach einem der Ansprüche 1 bis 8, dadurch gekennzeichnet, daß der Steuerschieber (13) eine Freigangstellung aufweist, in der beide Verbraucheranschlüsse (23, 24) mit den Rücklaufkammern (14, 18) verbunden sind, daß die lastdruckunabhängige Steuerung über die zweite Rücklaufkammer (18) entlastbar ist und daß die Steuerausnehmung (72) am zweiten zusätzlichen Kolbenabschnitt (48) den maximalen Druckmittelstrom zum Verbraucher (27) während der Umsteuerphase von Stellung Senken in Stellung Freigang begrenzt.

10. Wegeventil nach einem der Ansprüche 1 bis 9, dadurch gekennzeichnet, daß die Steuernuten (77, 79, 82) den zugeordneten Feinsteuerkerben (78, 80, 81) des Steuerschiebers (13) gegenüberliegen und zusammen mit diesen in einem einzigen Arbeitsgang hergestellt sind.

**Claims**

1. Hydraulic multiple-way valve (11) having a spool valve (13) arranged in a spool bore (12) of a housing (10), on which spool valve control notches (62, 63, 64, 65) are constructed for controlling the direction of a connected consumer (27), by means of which control notches two consumer ports (23, 24) can be connected in operating positions alternately to an inlet chamber (16) or to a first (14) or second (18) return chamber and can be shut off in a neutral position, and on which spool valve control notches (66, 67) forming a metering spool point (68) are arranged, which control notches are connected upstream of the control notches (62, 63, 64, 65) for controlling the direction in the flow of pressure medium flowing from the inlet (33), connected to a source of pressure medium, to the consumer ports (23, 24), and having a tapping point (73) downstream of the metering spool point (68) for discharging a control pressure to means for load pressure-independent control in the operating positions of the spool valve (13), and having a non-return valve (37) connected downstream of the metering spool point (68) and safeguarding both consumer ports (23, 24), characterised in that additional piston sections (42, 46, 48, 83) having control openings (70, 71, 72, 84) are constructed on the spool valve (13), which piston sections limit the maximum flow of pressure medium at the maximum deflection of the spool valve (13) in its respective position.

2. Multiple-way valve according to Claim 1, characterised in that an additional piston section (46, 48) is constructed respectively upstream and downstream of the metering spool point (68) on the spool valve (13), and in that these two piston sections (46, 48) have control openings (71, 72) which limit the maximum flow of pressure medium at maximum deflection of the spool valve (13) in its respective position.

3. Multiple-way valve according to Claim 1 and/or 2, characterised in that the control opening (70) of a third additional piston section (42) limits the flow of pressure medium from the first consumer port (23) to the first return chamber (14)

4. Multiple-way valve according to one of Claims 1 to 3, characterised in that the control opening (84) of a fourth additional piston section (83) limits the flow of pressure medium from the second consumer port (24) to the second return chamber (18).

5. Multiple-way valve according to one of Claims 1 to 4, characterised in that the control openings (70, 71, 72, 84) of the additional piston sections (42, 46, 48, 83) are of a construction of equal size.

6. Multiple-way valve according to one of Claims 1 to 4, characterised in that the control opening (70) of the third additional piston section (42) is of smaller construction than the control opening (72) of the second additional piston section (48).

7. Multiple-way valve according to one of Claims 1 to 4, characterised in that the control opening (84) of the fourth additional piston section (83) is of smaller construction than the control opening (71) of the first additional piston section (46).

8. Multiple-way valve according to one of Claims 1 to 7, characterised in that the control openings (77, 79) of the second and third additional piston sections (42a, 48a) are constructed on the one side of the spool valve (13a) and the control openings (72, 84) of the first and fourth additional piston sections (46a, 83) are constructed on the other side of the spool valve (13a).

9. Multiple-way valve according to one of Claims 1 to 8, characterised in that the spool valve (13) has a release position, in which both consumer ports (23, 24) are connected to the return chambers (14, 18), in that the load pressure-independent control can be balanced via the second return chamber (18) and in that the control opening (72) on the second additional piston section (48) limits the maximum flow of pressure medium to the consumer (27) during the changeover phase from the position, lowering, into the position, release.

10. Multiple-way valve according to one of Claims 1 to 9, characterised in that the control grooves (77, 79, 82) are located opposite the associated fine control notches (78, 80, 81) of the spool valve (13) and are manufactured together with said notches in a single work process.

**Revendications**

1. Vanne hydraulique multivoie (11) comportant un tiroir de commande (13) logé dans un alésage de tiroir (12) d'un boîtier (10), et ayant des encoches de commande (62, 63, 64, 65) pour commander la direction d'un utilisateur (27) raccordé, deux raccords d'utilisateur (23, 24) pouvant être reliés en position de travail, en alternance avec une chambre d'alimentation (16) ou une première et une seconde chambre de retour (14, 18) pouvant être fermées en position neutre, tiroir comportant des encoches de commande (66, 67) formant un point d'étranglement de mesure (68), encoches qui sont en amont d'une arrivée (33) d'une source de fluide sous pression pour fournir la veine de fluide sous pression allant vers les raccords d'utilisateur (23, 24) par rapport aux encoches de commande (62, 63, 64, 65) de commande directionnelle, et un point de détection (73) en aval de la zone d'étranglement de mesure (68) pour transmettre une pression de commande à des moyens assurant une commande indépendante de la pression de charge dans les positions de travail du tiroir (13) et un clapet anti-retour (37) en aval du point d'étranglement de mesure (68) protégeant les deux raccords (23, 24), vanne caractérisée en ce le tiroir de commande (13) comporte des segments de piston (42, 46, 48, 83) supplémentaires avec des rainures de commande (70, 71, 72, 84) qui limitent la veine maximale de fluide sous pression pour le débattement maximum du tiroir de commande (13) dans sa position respective.

2. Vanne multivoie selon la revendication 1, caractérisée en ce que le tiroir de commande (13) comporte en amont et en aval du point d'étranglement de mesure (68), chaque fois un segment de piston (46, 48) supplémentaire et en ce que les deux segments de piston (46, 48) comportent des rainures de commande (71, 72) qui limitent la veine maximale de fluide sous pression pour le débattement maximum du tiroir de commande (13) dans sa position respective.

3. Vanne multivoie selon la revendication 1 et/ou 2, caractérisée en ce que la rainure de commande (70) d'un troisième segment supplémentaire (42) de piston limite la veine de fluide sous pression du premier raccord d'utilisateur (23) vers la chambre de retour (14).

4. Vanne multivoie selon l'une des revendications 1 à 3, caractérisée en ce que la rainure de commande (84) d'un quatrième segment supplémentaire de piston (83) limite la veine de fluide sous pression du second raccord d'utilisateur (24) vers la seconde chambre de retour (18).

5. Vanne multivoie selon l'une des revendications 1 à 4, caractérisée en ce que les rainures de commande (70, 71, 72, 84) des segments de piston supplémentaires (42, 46, 48, 83) ont les mêmes dimensions.

6. Vanne multivoie selon l'une des revendications 1 à 4, caractérisée en ce que la rainure de commande (70) du troisième segment supplémentaire de piston (42) est inférieure à la rainure de commande (72) du second segment supplémentaire de piston (48).

7. Vanne multivoie selon l'une des revendications 1 à 4, caractérisée en ce que la rainure de commande (84) du quatrième segment de piston supplémentaire (83) est plus petite que la rainure de commande (71) du premier segment supplémentaire de piston (46).

8. Vanne multivoie selon l'une des revendications 1 à 7, caractérisée en ce que les rainures de commande (77, 79) du second et du troisième segment de piston supplémentaires (42a, 48a) sont réalisées d'un côté du tiroir de commande (13a) et les rainures de commande (72, 84) du premier et du quatrième segment de piston supplémentaires (46a, 83) sont réalisées de l'autre côté du tiroir de commande (13a).

9. Vanne multivoie selon l'une des revendications 1 à 8, caractérisée en ce que le tiroir de commande (13) présente une position de fonctionnement à vide pour laquelle les deux raccords d'utilisateur (23, 24) sont reliés aux chambres de retour (14, 18) et la commande indépendante de la pression de charge est évacuée par la seconde chambre de retour (18) et en ce que la rainure de commande (72) du second segment supplémentaire de piston (48) limite la veine maximale de fluide sous pression vers l'utilisateur (27) pendant la phase de commutation en passant de la position d'abaissement à la position de marche à vide.

10. Vanne multivoie selon l'une des revendications 1 à 9, caractérisée en ce que les rainures de commande (77, 79, 82) sont situées en regard des encoches de commande fine (78, 80, 81) du tiroir de commande (13) et sont réalisées avec celles-ci au cours d'une même opération.

FIG. 1

FIG.2

FIG.3

FIG.4

FIG.5

FIG.6

FIG.7